(19) Europäisches Patentamt
European Patent Office
Office européen des brevets

(11) Publication number: 0 312 375 A2

(12) # EUROPEAN PATENT APPLICATION

(21) Application number: 88309632.3

(22) Date of filing: 14.10.88

(51) Int. Cl.[4]: B 01 D 13/04
B 01 D 13/00

(30) Priority: 14.10.87 US 108823

(43) Date of publication of application:
19.04.89 Bulletin 89/16

(84) Designated Contracting States:
BE DE ES FR GB IT NL

(71) Applicant: Exxon Research and Engineering Company
P.O.Box 390 180 Park Avenue
Florham Park New Jersey 07932 (US)

(72) Inventor: Schucker, Robert Charles
10821 Goodwood Boulevard
Baton Rouge Louisiana 70815 (US)

(74) Representative: Somers, Harold Arnold et al
ESSO Engineering (Europe) Ltd. Patents & Licences
Apex Tower High Street
New Malden Surrey KT3 4DJ (GB)

(54) **Highly aromatic polymer alloy membrane of polyurea and polyurethane and its use in aromatic/non-aromatic separations.**

(57) A polymer alloy or blend is disclosed consisting of polyurea and polyurethane components which polymer alloy is useful for separating aromatics from non-aromatics, such as, for example, naphtha upgrading or for use in the chemical industry. The membranes can be used under pervaporation or perstraction conditions. The alloy membrane is characterized by possessing high thermal stability in combination with high permeability and high selectivity.

EP 0 312 375 A2

## Description

# HIGHLY AROMATIC POLYMER ALLOY MEMBRANE OF POLYUREA AND POLYURETHANE AND ITS USE IN AROMATIC/NON-AROMATIC SEPARATIONS

The present invention relates to a highly aromatic polymer alloy membrane of polyurea and polyurethane, and its use in separating aromatic and non-aromatic compounds.

A highly aromatic polymer alloy or blend membrane is described consisting of polyurea and polyurethane polymer components. The alloy or blend membrane is useful for the selective separation of aromatics from non-aromatics, e.g. aromatics from saturates and is especially useful for upgrading naphtha streams, heavy cat naphtha, intermediate cat naphtha, light aromatics containing streams boiling in the $C_5$-300°F range, light cat cycle oil boiling in the 400-650°F range and for recovery of benzene, toluene, xylene (BTX) or other aromatics from streams normally encountered in the chemical industry. The alloy or blend membrane can be used under pervaporation or perstraction conditions.

The aromatic polymer alloy or blend membrane is a symmetric membrane prepared by combining or mixing polyurea components with polyurethane components as discrete building blocks. The components are not mixed in their precursor or starting material form and thus the resulting membrane is not a true copolymer membrane material. Rather a solution of polyurea polymer is prepared and physically mixed with a solution of polyurethane polymer, the mixed solution is deposited on a suitable substrate, the solvent permitted to evaporate and an alloy or blend of polyurea and polyurethane is left on the substrate in the form of a membrane which can be utilized to separate aromatics from saturates.

The aromatic polymer alloy or blend of polyurea and polyurethane contains, on a wt.% basis about 5 to about 95 wt.% polyurea component, the balance being polyurethane, preferably 10 to 90 wt.% polyurea, most preferably 25 to 75 wt% polyurea.

## BACKGROUND OF THE INVENTION

The use of membranes to separate aromatics from saturates has long been pursued by the scientific and industrial community and is the subject of numerous patents.

U.S. Patent 3,370,102 describes a general process for separating a feed into a permeate stream and a retentate stream and utilizes a sweep liquid to remove the permeate from the face of the membrane to thereby maintain the concentration gradient driving force. The process can be used to separate a wide variety of mixtures including various petroleum fractions, naphthas, oils, hydrocarbon mixtures. Expressly recited is the separation of aromatics from kerosene.

U.S. Patent 2,958,656 teaches the separation of hydrocarbons by type, i.e. aromatic, unsaturated, saturated, by permeating a portion of the mixture through a non-porous cellulose ether membrane and removing permeate from the permeate side of the membrane using a sweep gas or liquid. Feeds include hydrocarbon mixtures, naphtha (including virgin naphtha, naphtha from thermal or catalytic cracking, etc.).

U.S. Patent 2,930,754 teaches a method for separating hydrocarbons e.g. aromatic and/or olefins from gasoline boiling range mixtures, by the selective permeation of the aromatic through certain cellulose ester non-porous membranes. The permeated hydrocarbons are continuously removed from the permeate zone using a sweep gas or liquid.

U.S. Patent 4,115,465 teaches the use of polyurethane membranes to selectively separate aromatics from saturates via pervaporation.

## DETAILED DESCRIPTION OF THE INVENTION

An aromatic polymer alloy or blend membrane is described which is useful for the separation of aromatics from non-aromatics, e.g. aromatics from saturates.

The aromatic polymer alloy or blend membrane of the present invention is prepared by physically mixing solutions of polyurea polymer and polyurethane polymers, casting, spreading, pouring or otherwise depositing a thin layer of the mixed polymer solution on an appropriate substrate and permitting the solvent to evaporate which results in the formation of the polymer alloy on the substrate.

In preparing this polymer alloy or blend membrane use is made of discrete, separate solutions of prepared polymers of polyurea and polyurethane. On a weight % basis the alloy or blend comprises from about 5 to about 95 wt.% polyurea, preferably about 10 to about 90 wt.% polyurea, most preferably about 25 to about 75 polyurea, the balance of the alloy being polyurethane.

The polyurea polymer has a molecular weight of about 10,000 to 100,000, preferably about 20,000 to 80,000 (number average molecular weight). Similarly, the polyurethane polymer has a molecular weight of 10,000 to 100,000, preferably 20,000 to 80,000.

These polymers are separately synthesized in appropriate solvents, additional solvent being added if necessary to produce solutions of the polymer. Preferably the solvent used in the synthesis of the polymers or as added solvent to produce polymer solutions is a solvent common for both the polyurea and polyurethane but in any case the solvent(s) employed are true solvents for both polymers.

The polyurea and polyurethane polymers themselves are synthesized by conventional techniques.

The polyurea polymer is prepared from standard starting materials, i.e. aliphatic, alkylaromatic or aromatic diisocyanates or polyisocyanates and diamines, or polyamines in such typical polyurea synthesis solvent as

dimethylsulfoxide. Similarly aromatic, aliphatic or alkylaromatic carboxylic acids may be reacted with aromatic, aliphatic or alkylaromatic diisocyanates or polyisocyanates to produce the desired polyurea polymer.

When combining the isocyanates with the diamines or similarly the carboxylic acids with the isocyanates to produce the polyurea polymer it is preferred that the components be combined such that the total aromatic carbon content of the resulting polyurea polymer be about 86% or less, preferably about 50 to 75%. This is so since polyurea polymers with very high aromatic carbon content tend to be glassy rather than elastomeric in nature and in the practice of the present invention it is desirable that the membrane be elastomeric at the temperatures employed in the aromatics-saturates separation process. Polyurea polymers possessing aromatic contents at the high end of the recited ranges are preferably employed in the present alloy membrane when the polyurea polymer content of the alloy is 75% or less.

The polyurethane polymer is similarly prepared from standard starting materials, i.e. dihydroxy or polyhydroxy compounds (e.g. polyethers or polyesters of about 250 to 5000 molecular weight, preferably mixtures of different molecular weight materials of the same type) with aliphatic, alkylaromatic or aromatic diisocyanates or polyisocyanates and various chain extenders such as diols or polyols.

The polyester components are prepared from aliphatic or aromatic dicarboxylic acids and aliphatic or aromatic dialcohols. Aliphatic dicarboxylic acids refer to those materials having the general formula HOOCRCOOH where R contains 2 to 10 carbons (and may be either a straight or branched chain configuration). Aromatic dicarboxylic acids refer to those materials having the general structure HOOCRCOOH where R is:

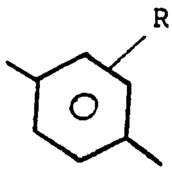

I

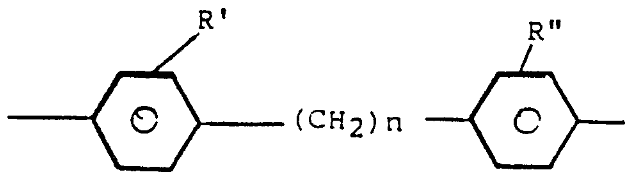

II

wherein R′ and R″ may be the same or different and are selected from the group consisting of H and $C_1$-$C_5$ carbons or $C_6H_5$ and combinations thereof, and n is 0 to 4. It is to be understood that in the above formula each R′ or R″ may itself represent a mixture of H, $C_1$-$C_5$ or $C_6H_5$.

Dialcohols have the general structure HOROH where R may be

$-(CH_2)_n-$ ,

III

or

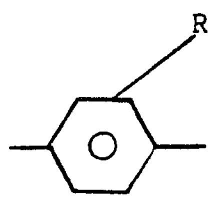

IV

where n is 1 to 10, preferably 4 to 6, and R′ is H, $C_1$ to $C_5$ or $C_6H_5$ or

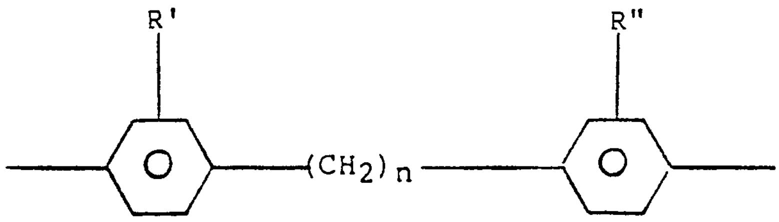

V

where R′, R″ and n are defined in the same manner as for the aromatic dicarboxylic acids.

The diisocyanates are preferably aromatic diisocyanates having the general structure:

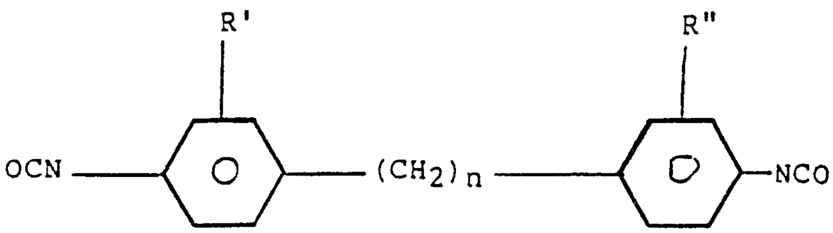

VI

where R′ and R″ are the same or different and are selected from the group consisting of H, $C_1$-$C_5$ and $C_6H_5$ and n ranges from 0 to 4.

Examples of the polyether polyols useful in the present invention as polymer precursors are polyethylene glycol, (PEG), polypropylene glycol (PPG), polytetramethylene glycol, PEG/PPG random copolymers, etc. having molecular weights ranging from about 250 to 5000. Aliphatic diisocyanates which may be utilized are exemplified by hexamethylene diisocyante (HDI), 1,6-diisocyanato-2,2,4,4-tetramethylhexane (TMDI), 1,4-cyclohexanyl diisocyanate (CHDI), isophorone diisocyante (IPDI), while useful alkylaromatic diisocyanates are exemplified by toluene diisocyanate (TDI) and bitolylene diisocyanate (TODI). Aromatic diisocyanates are exemplified by 4,4′-diisocyanato diphenyl methane (MDI). Polyisocyanates are exemplified by polymeric MDI (PMDI) and Isonate 143L which is a carbodiimide modified MDI. Useful polyamines are exemplified by polyethyleneimine and 2,2′ ,2″ triaminotriethylamine. Useful amino alcohols are exemplified by 6-aminohexanol, 4-aminophenol, 4-amino, 4′ hydroxy-diphenylmethane.

The above are presented solely by way of example. Those skilled in the art, with the present teaching before them, can select from the innumerable materials available the various starting materials which upon combination as described herein will produce the desired polyurea polymer and polyurethane polymer materials which are mixed together to form the physical alloy out of which the membranes of the present invention are fabricated.

The membranes are produced by preparing the separate, discrete polyurea polymer and polyurethane polymer solutions in solvent (preferably a common solvent or at least solvents in which both of the polymers are soluble to an appreciable extent) and/or adding sufficient solvent to produce a solution. The separate solutions of polymers are then mixed to produce a casting solution containing the desired ratio of polyurea polymer to polyurethane polymer, the total polymer content of this casting solution being in the range 10 to 40 wt%, preferably 10 to 25 wt%, most preferably 15-20 wt%. Because of the limited solubility of the polyurea polymer it is to be understood that for alloys with high polyurea polymer content the amount of total polymer in the casting solutions will be lower than the 40% recited above, the upper limit on high polyurea polymer content alloys being in the 25% or lower range. With the present teaching before them, those skilled in the art can produce alloy casting solutions having the necessary characteristics for ease of casting and handling in producing the alloy membranes of the present invention. The solution is then poured or spread on an appropriate support medium, such as a metal or glass plate or, if desired, a woven fiber backing, such as woven fiber glass, nylon, polyester, etc. may be used if solvent removal during the casting-membrane production sequence employs a vacuum, but preferably a non-woven backing, such as porous polyolefin, e.g. polypropylene or porous teflon are employed. Backing materials employed are those which are not attacked by the solvent(s) used to produce the polyurea polymer solution, the polyurethane polymer solution or the final casting solution.

The membrane may be cast in any thickness, membranes ranging in thickness of from 0.1 to 50 microns

being preferred.

Alternatively a very thin layer of the polyurea polymer and polyurethane polymer alloy solution can be deposited onto a highly permeable, non-selective polyurethane layer producing a composite membrane comprising a thin dense layer of polyurea polymer and polyurethane polymer alloy membrane about 0.1 to 5 microns thick on a permeable, non-selective, thick polyurethane. The thick layer of polyurethane (about 20 to 100 microns thick serves as a support layer permitting one to produce a thin, dense, selective layer of polyurea polymer and polyurethane polymer alloy membrane which would otherwise by mechanically unmanageable due to their thinness. Due to the chemical similarity between the polyurethane support layer and the polyurea polymer and polyurethane polymer alloy membrane selective layer, the two layers interact through hydrogen bonding to produce a very strong adhesion.

In using this technique to produce sheet material, the thick, permeable polyurethane layer can be deposited on a suitable backing material such as porous fiber glass, polyethylene, polypropylene, nylon, teflon, etc. after which the thin, dense selective polyurea/urethane layer would be deposited onto the polyurethane layer. Suitable permeable polyurethane layers can be produced using the polymers and techniques recited in U.S. Patent 4,115,465.

In producing hollow fibers or tubes using this composite membrane technique, first a tube or fiber of permeable polyurethane is produced after which a thin dense layer of the selective polyurea polymer polyurethane polymer alloy is deposited on either the outer or inner surface of the tube or fiber support.

Due to the thinness of the dense selective polyurea polymer polyurethane polymer alloy membrane layer the composite membrane exhibits high flux while maintaining a very high degree of selectivity.

The solvent is permitted to evaporate with the application of heat if needed to drive off the solvent. If a solvent of a low enough vapor pressure is employed the application of heat can be omitted.

Thin film composite membranes of the alloy on a permeable support layer can also be prepared by suspension-dispersion deposition as taught in copending application Attorney Docket No. OP-3331-D, United States Serial Number 108,819, filed even date herewith in the name of Robert C. Schucker. (United States' Serial No. 108,819 (OP-3331-D) is equivalent to our copending European patent application entitled "Method of Preparing Thin Film Composite Membranes by Suspension Deposition, and Use of Such Membranes" filed on the same date as the present European patent application.)

In OP-3331-D, USSN , , the thin film composite membrane constituting a thin layer of polymer deposited on a thick-permeable support layer is produced by preparing a fine dispersion of discrete polyurea/polyurethane particles (alloy-mixture) in a solvent which does not react with or dissolve the selected thick-permeable support layer. The dispersion is contacted with only one face of the support layer. The solvent is permitted to evaporate and the composite membrane results. The support layer will generally have pores ranging from 0.005 to 0.5 microns. Typical support include polyamide, polyimide, polyacrylonitrile, polybenzimidazole, teflon, cellulose acetate and polyolefins such as polyethylene and polypropylene.

The polymer suspension is deposited as a thin layer (about 2 microns or less) on the support structure. Polymer concentration in the suspension-dispersion can range from 0.5 to 10%, preferably 1 to 5%, most preferably about 2%. Non-dissolving solvents are 1,4-dioxane, cellosolve acetate, tetrahydrofuran, ketones (e.g. acetone) and aromatic solvents such as toluene or xylenes.

The membranes are useful for the separation of aromatics from non-aromatics in petroleum and chemical streams, and are particularly useful for the separation of large substituted aromatics from saturates as are encountered in heavy cut naphtha streams. The separation techniques which may successfully employ the membranes of the present invention include perstraction and pervaporation.

Perstraction involves the selective dissolution of particular components contained in a mixture into the membrane, the diffusion of those components through the membrane and the removal of the diffused components from the downstream side of the membrane by use of a liquid sweep stream. In the perstractive separation of aromatics from saturates in petroleum or chemical streams (particularly heavy cat naphtha streams) the aromatic molecules present in the feedstream dissolve into the membrane film due to similarities between the membrane solubility parameter and those of the aromatic species in the feed. The aromatics then permeate (diffuse) through the membrane and are swept away by a sweep liquid which is low in aromatics content. This keeps the concentration of aromatics at the permeate side of the membrane film low and maintains the concentration gradient which is responsible for the permeation of the aromatics through the membrane.

The sweep liquid is low in aromatics content so as not to itself decrease the concentration gradient. The sweep liquid is preferably a saturated hydrocarbon liquid with a boiling point much lower or much higher than that of the permeated aromatics. This is to facilitate separation, as by simple distillation. Suitable sweep liquids, therefore, would include, for example, $C_3$ to $C_6$ saturated hydrocarbons and lube basestocks ($C_{15}$-$C_{20}$).

The perstraction process is run at any convenient temperature, preferably as low as possible.

The choice of pressure is not critical since the perstraction process is not dependent on pressure, but on the ability of the aromatic components in the feed to dissolve into an migrate through the membrane under a concentration driving force. Consequently, any convenient pressure may be employed, the lower the better to avoid undesirable compaction or rupture of the membrane.

If $C_3$ or $C_4$ sweep liquids are used at 25° or above in liquid state, the pressure must be increased to keep in liquid phase.

Pervaporation, by comparison is run at generally higher temperatures than perstraction and relies on

vacuum on the permeate side to evaporate the permeate from the surface of the membrane and maintain the concentration gradient driving force which drives the separation process. As in perstraction the aromatic molecules present in the feed dissolve into the membrane film, migrate through said film and re-emerge on the permeate side under the influence of a concentration gradient. Pervaporative separation of aromatics from saturates can be performed at a temperature of about 25° C for the separation of benzene from hexane but for separation of heavier aromatic/saturate mixtures, such as naphtha and heavy cat naphtha, higher temperature of at least 80° C and higher, preferably at least 100° C and higher, more preferably 120° C and higher should be used. Temperatures of about 140°C have been successfully used, the maximum upper limit being that temperature at which either the membrane is physically damaged. Vacuum on the order of 1-50 mm Hg is pulled on the permeate side. The vacuum stream containing the permeate is cooled to condense out the highly aromatic permeate condensation being conducted at as low a temperature as possible. Condensation should be at a temperature at least below the dew point of the permeate at the level of vacuum being employed.

The membrane itself may be in any convenient form utilizing any convenient module design. Thus, sheets of membrane material may be used in spiral wound or plate and frame permeation cell modules. Tubes and hollow fibres of membranes may be used in bundled configurations with either the feed or the sweep liquid (or vacuum) in the internal space of the tube or fiber, the other material obviously being on the other side.

Most conveniently, the membrane is used in a hollow fiber configuration with the feed introduced on the exterior side of the fiber, the sweep liquid flowing on the inside of the hollow fiber to sweep away the permeate highly aromatic species, thereby maintaining the desired concentration gradient. The sweep liquid, along with the aromatics contained therein, is passed to separation means, typically distillation means, however, if a sweep liquid of low enough molecular weight is used, such is liquefied propane or butane, the sweep liquid can be permitted to simply evaporate, the liquid aromatics being recovered and the gaseous propane or butane (for example) being recovered and reliquefied by application of pressure or lowering of temperature.

The present invention will be better understood by reference to the following Examples which are offered by way of illustration and not limitation.

Example 1

A solution containing a polyurethane polymer is prepared as follows. Twenty grams (0.01 mole) of polyethylene adipate (MW = 2000) and 5.0 grams (0.02 mole) of 4, 4′diisocyanato-diphenylmethane are added to a 250 ml flask equipped with a stirrer and drying tube. The temperature is raised to 90° C and held for 2 hours with stirring to produce an isocyanate-capped prepolymer. To this prepolymer is added 50 ml of dimethylformamide and the mixture is stirred until clear. One point one eight grams (1.18 grams = 0.01 mole) 1,6-hexanediol is then added as a chain extender and the mixture reheated to 90°C for another 2 hours to complete the reaction.

In a separate flask, 1.98 grams (0.01 mole) of 4,4′-diamino-diphenylmethane is dissolved in 20 ml of dimethylformamide. To that flask is added a solution comprised of 2.50 grams (0.01 mole) 4, 4′-diisocyanato-diphenylmethane in 20 ml dimethylformamide with stirring. The reaction is exothermic and rapid. The resulting viscous solution of poly[methylene bis-(4-phenyl urea)] is added to the flask containing the solution of polyurethane and mixed thoroughly at room temperature. The resulting polymer alloy solution is cast onto a glass plate and dried in either a vacuum oven at 60-80° C or a convection oven at 100° C overnight. The film can then be used as a membrane for aromatic/saturate separation in pervaporation or perstraction.

## Claims

1. A highly aromatic polymer alloy membrane consisting of polyurea polymer mixed with polyurethane polymer useful for separating aromatics from non-aromatics.

2. The alloy membrane of claim 1 wherein the polyurea component constitutes from about 5 to about 95 wt% of the alloy.

3. The alloy membrane of claim 1 or claim 2 wherein the polyurea component has a number average molecular weight in the range of from about 10,000 to 100,000.

4. The alloy membrane of any one of claims 1 to 3 wherein the polyurea component has a total aromatic carbon content of about 86% or less.

5. The alloy membrane of any one of claims 1 to 4 wherein the polyurea-polyurethane layer is deposited on a highly permeable non-selective polyurethane layer to produce a composite membrane, the thickness of the polyurea-polyurethane layer being in the range of from about 0.1 to 5.0 microns (0.1 to 5.0 µm).

6. A method for separating aromatic hydrocarbons from feed streams containing mixtures of aromatic and non-aromatics by selectively permeating the aromatic component of said feed stream through a polyurea-polyurethane alloy membrane.

7. The method of claim 6 wherein the separation is conducted under pervaporation or perstraction conditions.

8. The method of claim 6 or claim 7 wherein the polyurea-polyurethane alloy membrane contains from about 5 to about 95 wt% polyurea.

9. The method of any one of claims 6 to 8 wherein the polyurea-polyurethane alloy membrane contains polyurea having a total aromatic carbon content of about 86% or less.

10. The method of any one of claims 6 to 9 wherein the feed stream is selected from naphtha streams, heavy cat naphtha streams, intermediate cat naphtha streams light aromatics containing streams boiling in the $C_5$-300° F (148.9° C) range, light cat cycle oil boiling in the 400° 650° F (204.4 to 343.3 C) range.